# FASCICULE DE BREVET EUROPEEN

(11) **EP 3 260 715 B1**
(45) Date de publication et mention de la délivrance du brevet: **29.07.2020**
(21) Numéro de dépôt: 16305761.5
(22) Date de dépôt: 23.06.2016
(51) Int. Cl.: F16C 17/02, F16C 33/04, F16C 43/02, F16C 33/26, B63H 23/32

(54) **BAGUE POUR PALIER D'UNE UNITÉ DE PROPULSION D'UN VÉHICULE MARIN COMPRENANT UNE PARTIE ACTIVE SEGMENTÉE**
RING FÜR LAGER EINER ANTRIEBSEINHEIT EINES WASSERFAHRZEUGS, DAS EINEN IN SEGMENTE UNTERTEILTEN AKTIVEN TEIL UMFASST
RING FOR A BEARING OF A DRIVE UNIT OF A WATERCRAFT COMPRISING A SEGMENTED ACTIVE PORTION

(43) Date de publication de la demande: 27.12.2017
(73) Titulaire: GE Energy Power Conversion Technology Ltd, Rugby Warwickshire CV21 1BU (GB)
(72) Inventeur: JULLIAND, Lionel, 90000 BELFORT (FR); FIEBERLING, Bruno, CV21 1BU RUGBY, Warwickshire (GB); FAN, Xinmin, RUGBY, Warwickshire (GB)
(74) Mandataire: Casalonga

(56) Documents cités:
- EP-A1- 2 993 365
- WO-A1-02/16789
- DE-A1-102008 037 677
- GB-A- 191 305 619

## Description

La présente invention concerne le domaine des unités de propulsion pour des véhicules marins, tels que des navires, des sous-marins ou encore des plates-formes pétrolières. Plus particulièrement, la présente invention concerne le domaine des unités de propulsion en nacelle.

Ces unités de propulsion, également connues sous la dénomination anglo-saxonne « propulsion oriented drive », ou « POD », comprennent de manière générale :
- un carter mobile, ou nacelle mobile, relié mécaniquement au véhicule marin selon une liaison pivot autour d'un axe tel que par exemple l'axe de lacet du véhicule,
- un arbre de propulsion s'étendant selon la direction longitudinale du carter mobile et relié mécaniquement, selon une liaison pivot autour de son propre axe, au véhicule marin, et
- un élément de propulsion, tel qu'une hélice ou un rotor de pompe, monté sur l'arbre de propulsion.

De manière générale, afin de réaliser la liaison pivot connectant mécaniquement l'arbre de propulsion et l'élément de propulsion, deux paliers d'arbre sont montés sur les deux extrémités de l'arbre de propulsion. Les deux paliers d'arbre sont conçus de sorte à assurer le maintien de l'arbre de propulsion selon sa direction radiale, autrement dit le guidage radial. Par exemple, les paliers d'arbre peuvent être du type à friction, comprenant deux bagues respectivement solidaires du carter mobile et de l'arbre de propulsion. L'une des deux bagues comporte une partie active cylindrique assurant une fonction de contact glissant avec une surface de glissement prévue sur l'autre bague.

L'un des deux paliers d'arbre est également conçu afin d'assurer la fonction de maintien de l'arbre de propulsion selon sa direction axiale, autrement dit le guidage axial. Pour ce faire, l'une des bagues du palier d'arbre concerné comporte une partie active frontale assurant une fonction de contact glissant avec une surface de glissement montée sur une butée axiale du palier d'arbre.

Afin de préserver la durée de vie des paliers d'arbre, il est généralement nécessaire de remplacer régulièrement les parties actives des paliers d'arbre.

Pour ce faire, l'unité de propulsion peut être démontée par rapport au véhicule marin et transportée en atelier. Un opérateur dispose alors de l'espace et de l'outillage nécessaire pour ouvrir les paliers d'arbre, démonter les parties actives et les remplacer par des nouvelles. Une telle solution nécessite toutefois d'immobiliser le véhicule marin en cale sèche le temps nécessaire au remplacement des parties actives.

Afin de pallier cet inconvénient, il peut être prévu des aménagements à l'intérieur du carter mobile, de sorte à permettre à l'opérateur de pénétrer et de travailler à l'intérieur du carter mobile de l'unité de propulsion. Dans ce cas, il n'est pas nécessaire de démonter l'unité de propulsion et d'immobiliser le véhicule marin en cale sèche.

Toutefois, le travail de l'opérateur à l'intérieur du carter mobile est généralement rendu difficile, voire impossible, à cause de l'espace réduit et de l'encombrement causé par la présence des paliers d'arbre et d'autres éléments tels qu'une machine électrique d'entrainement de l'arbre de propulsion. Cette difficulté est rendue encore plus accrue au niveau de l'extrémité comportant un palier d'arbre assurant à la fois la fonction de maintien radial et la fonction de maintien axial, de l'arbre de propulsion.

Le document EP 2 993 365 divulgue un palier à glissement radial pour propulseur en nacelle comprenant un corps annulaire constitué par des segments circonférentiels.

Au vu de ce qui précède, l'invention a pour but de fournir un palier d'arbre ou un élément constitutif d'un palier d'arbre palliant les inconvénients précités.

En particulier, l'invention a pour objet de permettre de monter ou de démonter plus facilement les parties actives d'un palier d'arbre, notamment dans le cas où un tel palier d'arbre combine les fonctions de guidage radial et de guidage axial.

À cet effet, il est proposé une bague pour palier d'arbre d'une unité de propulsion de véhicule marin, comportant un corps annulaire, une partie active cylindrique destinée à assurer une fonction de contact glissant avec une autre bague du palier d'arbre.

Selon une caractéristique générale de cette bague, la partie active cylindrique est segmentée en une pluralité de surfaces cylindriques, chaque surface cylindrique étant fixée de manière amovible au corps annulaire.

L'utilisation d'une partie active cylindrique segmentée permet de simplifier le montage et le démontage par un opérateur, notamment lorsque ce dernier travaille dans un espace réduit tel que l'intérieur du carter mobile.

De manière avantageuse, la bague comprenant une partie active segmentée est conçue pour être mobile par rapport à un carter de l'unité de propulsion. Par exemple, elle peut être solidaire de l'arbre de propulsion. Dans ce cas, l'autre bague est de préférence fixe par rapport au carter. Une telle disposition est notamment avantageuse car elle permet de faciliter le démontage des parties actives.

Selon un mode de réalisation, le corps annulaire est segmenté en une pluralité de modules annulaires escamotables, chaque module annulaire comportant une surface cylindrique faisant partie de la partie active cylindrique.

L'opérateur, au moyen d'une telle bague, peut actionner le déplacement d'un des modules annulaires jusqu'à une position dans laquelle la surface cylindrique est accessible, pour démonter facilement celle-ci.

On peut également prévoir que chaque module annulaire est mobile par rapport aux autres en translation selon une direction axiale de la bague.

Selon un mode de réalisation, chaque module annulaire comporte un support et un tampon radial, le tampon radial comprenant la surface cylindrique, le tampon radial pouvant être désolidarisé par rapport au support.

On peut en outre prévoir une armature cylindrique comprenant, pour chaque module annulaire, deux tiges dirigées selon une direction axiale de la bague, chaque module annulaire comprenant deux perçages débouchants, chaque tige étant insérée dans un perçage débouchant du module annulaire associé de sorte à pouvoir coulisser à l'intérieur de celui-ci.

Selon un mode de réalisation, tous les modules annulaires s'étendent entre deux arcs de cercle sous-tendus par un même angle au centre.

Avantageusement, l'angle au centre est compris entre 20° et 40°, et de manière encore plus avantageuse entre 25° et 35°.

Une conception des modules annulaires avec un angle au centre idéalement situé dans de tels intervalles autour de 30°est avantageuse en ce que les surfaces cylindriques sont suffisamment peu volumineuses pour être facilement démontables, et ne sont pas trop nombreuses pour ne pas rallonger inutilement le temps de travail de l'opérateur.

Selon un mode de réalisation, la bague comporte une partie active frontale destinée à assurer une fonction de contact glissant avec une butée axiale du palier d'arbre, la partie active frontale étant segmentée en une pluralité de surfaces frontales, chaque surface frontale étant fixée de manière amovible au corps annulaire.

Une telle bague permet d'assurer les deux fonctions de guidage radial et axial, tout en générant un encombrement réduit et en présentant des parties actives frontales et cylindriques facilement démontables.

De préférence, le corps annulaire est segmenté en une pluralité de modules annulaires escamotables, chaque module annulaire comportant une surface frontale, la surface frontale faisant partie de la partie active frontale.

Avantageusement, chaque module annulaire est mobile entre une position dans laquelle ledit module annulaire est axialement situé d'un côté de la partie active frontale et une position dans laquelle ledit module annulaire est axialement situé de l'autre côté de la partie active frontale.

Selon un mode de réalisation, chaque module annulaire comporte un support et un tampon axial, le tampon axial comprenant la surface frontale, le tampon axial pouvant être désolidarisé par rapport au support.

On peut également prévoir une seconde partie active frontale destinée à assurer une fonction de contact glissant avec une seconde butée axiale du palier d'arbre, la partie active cylindrique étant axialement située entre les parties actives frontales.

Selon un autre aspect, il est proposé un palier d'arbre destiné à être monté sur un arbre d'une unité de propulsion d'un véhicule aquatique, comprenant une bague intérieure et une bague extérieure, au moins l'une des bagues intérieure et extérieure étant une bague telle que décrite précédemment.

De manière avantageuse, la bague intérieure est une bague telle que décrite précédemment selon l'invention, la bague extérieure étant une bague de conception classique. L'intérêt d'une telle disposition provient du fait que la bague intérieure est la plupart du temps la bague mobile et la bague extérieure est fixe.

Selon un mode de réalisation, le palier d'arbre comprend une première butée axiale et une seconde butée axiale, la première butée axiale étant mobile en translation selon une direction axiale du palier, la première butée axiale comprenant une première partie active frontale assurant une fonction de contact glissant avec la bague intérieure, la bague intérieure comprenant une deuxième partie active frontale assurant une fonction de contact glissant avec la deuxième butée axiale.

Selon encore un autre aspect, il est proposé une utilisation d'un palier tel que décrit précédemment pour le démontage d'une surface constituant une partie active dudit palier.

D'autres buts, caractéristiques et avantages de l'invention apparaitront à la lecture de la description suivante, donnée uniquement à titre d'exemple non limitatif, et faite en référence aux dessins annexés sur lesquels :
- la figure 1 représente schématiquement un palier d'arbre selon un premier exemple de réalisation,
- la figure 2 est une vue en perspective d'une bague du palier de la figure 1,
- la figure 3 est une vue en perspective d'un module annulaire de la bague de la figure 2,
- la figure 4 est une vue en coupe axiale de la bague de la figure 2 avec tous les modules annulaires disposés selon une position de fonctionnement,
- la figure 5 est une vue en coupe axiale de la bague de la figure 2 avec un module annulaire disposé selon une position de montage/démontage, et
- la figure 6 est une vue en coupe axiale d'une bague d'un palier d'arbre selon un deuxième exemple de réalisation de l'invention.

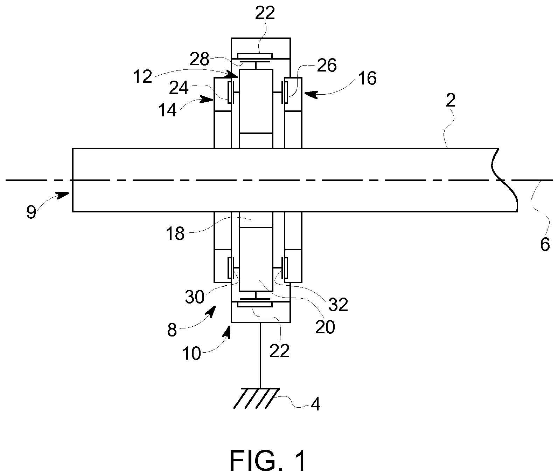

En référence à la figure 1, il est décrit un arbre de propulsion 2 supportant un élément de propulsion (non représenté) d'une unité de propulsion. L'unité de propulsion comporte un carter mobile schématiquement représenté sur la figure 1 par un bâti 4. L'unité de propulsion est destinée à être montée sur un véhicule marin (non représenté) pouvant être un navire, un sous-marin ou encore une plate-forme pétrolière. L'élément de propulsion monté sur l'arbre de propulsion 2 peut par exemple être une hélice ou un rotor de pompe.

L'arbre de propulsion 2 s'étend selon une direction axiale 6 et est mécaniquement connecté au carter mobile 4 par une liaison pivot autour de la direction axiale 6. Dans le mode de réalisation illustré, l'arbre de propulsion 2 est entraîné en rotation par une machine électrique (non représentée). L'arbre de propulsion 2 comporte une extrémité libre 9 et une extrémité entrainée (non représentée) opposée par rapport à l'extrémité libre 9. L'extrémité entrainée correspond à l'extrémité de l'arbre 2 sur laquelle est monté l'élément de propulsion. En d'autres termes, l'extrémité libre 9 correspond à l'extrémité de l'arbre 2 opposée à l'élément de propulsion par rapport à la machine électrique. Pour permettre la réalisation de la liaison pivot de l'arbre 2 par rapport au bâti 4, l'unité de propulsion comporte un palier d'arbre 8. Le palier d'arbre 8 assure le guidage relatif de l'arbre 2 par rapport au carter 4, selon la direction radiale par rapport à l'axe 6. Le palier 8 assure également une fonction de butée axiale empêchant le déplacement en translation de l'arbre 2 par rapport au carter 4, selon la direction de l'axe 6.

Un second palier d'arbre (non représenté) est monté sur l'extrémité entrainée de l'arbre de propulsion 2. Ainsi, deux paliers d'arbre sont respectivement montés à une extrémité de l'arbre 2. Bien que, dans l'exemple de réalisation illustré sur la figure 1, le palier d'arbre 8, qui assure une double fonction de guidage radial et axial, est monté sur l'extrémité libre 9, on peut sans sortir du cadre de l'invention intervertir la position des deux paliers d'arbre.

Le palier 8 comporte une bague extérieure 10, une bague intérieure 12, une première butée axiale 14 et une seconde butée axiale 16. La bague extérieure 10 et la butée axiale 14 sont encastrées par rapport au carter mobile 4. La bague intérieure 12 comporte une armature cylindrique 18 et un corps annulaire 20 monté sur l'armature 18. L'armature cylindrique 18 est montée solidaire de l'arbre de propulsion 2. Par exemple, l'armature cylindrique 18 peut être frettée sur l'arbre 2. Le corps annulaire 20 est mécaniquement connecté à l'armature cylindrique 18 par une liaison mécanique de type à glissière dirigée par la direction axiale 6. En d'autres termes, le corps annulaire 20 est capable de se déplacer en translation selon la direction de l'axe 6, par rapport à l'armature 18.

La bague extérieure 10 comporte une surface de glissement 22 cylindrique et radialement située à l'intérieur de la bague extérieure 10. La surface de glissement 22 s'étend sur toute la circonférence intérieure de la bague 10.

La butée axiale 14 comporte une surface de glissement 24 frontale et s'étendant dans un plan sensiblement perpendiculaire à la direction de l'axe 6. La surface de glissement 24 s'étend sur toute la circonférence de la butée axiale 14, de sorte à avoir une forme annulaire s'étendant autour de l'axe 6.

La butée axiale 16 comporte une surface de glissement 26 frontale s'étendant sensiblement dans un plan parallèle à celui de la surface de glissement 24, c'est-à-dire dans un plan sensiblement perpendiculaire à la direction de l'axe 6. La surface 26 s'étend sur toute la circonférence de la butée axiale 16, de sorte à avoir une forme annulaire autour de l'axe 6.

Les surfaces de glissement 22, 24 et 26 sont réalisées en des matériaux conçus pour favoriser leur frottement avec une autre surface de la bague intérieure 12. Un autre terme communément utilisé par l'homme du métier pour désigner les surfaces de glissement 22, 24 et 26 est le terme de glace.

La butée axiale 16 est capable de se déplacer en translation par rapport au carter mobile 4 selon la direction de l'axe 6. Plus particulièrement, la butée 16 est capable de se déplacer axialement entre une position de fonctionnement, telle qu'illustrée sur la figure 1, et une position de montage/démontage, décalée axialement vers l'extérieur du palier 8, c'est à dire décalée vers la droite par rapport à la figure 1. Entre la position de montage/démontage et la position de fonctionnement, la butée 16 est avantageusement décalée d'une distance comprise entre l'épaisseur de la bague intérieure 12 et trois fois cette épaisseur.

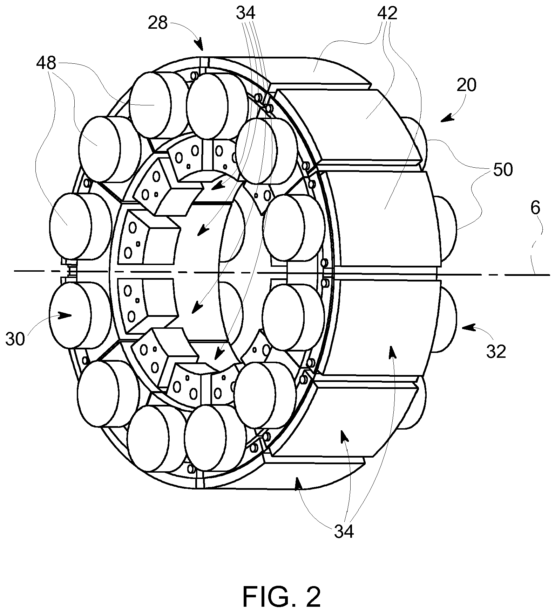

On va maintenant décrire la structure du corps annulaire 20 de la bague intérieure 12, en référence aux figures 1 et 2. La figure 2 représente schématiquement la bague intérieure 12. Pour davantage de clarté, seule le corps cylindrique 20 a été représenté sur la figure 2, l'armature cylindrique 18 ayant été volontairement omise.

Le corps 20 comporte une partie active cylindrique 28 s'étendant autour de la direction axiale 6. Comme cela est représenté sur la figure 1, la partie active 28 assure un contact glissant, orienté selon la direction radiale par rapport à l'axe 6, avec la surface de glissement 22. Le corps cylindrique 20 comporte une première partie active frontale 30 formant un plan sensiblement perpendiculaire à la direction axiale 6. Comme cela est visible sur la figure 1, la partie active 30 assure un contact glissant, orienté selon la direction axiale de l'axe 6, avec la surface de glissement 24. De même, le corps 20 comporte une seconde partie active frontale 32, formant un plan sensiblement perpendiculaire à la direction axiale 6. La partie active 32 est axialement opposée à la partie active 30, par rapport à la bague 12. Comme cela est visible sur la figure 1, la partie active 32 assure un contact glissant, orienté selon la direction axiale de l'axe 6, avec la surface de glissement 26.

De manière avantageuse, un fluide hydraulique est fourni pour être inséré entre les parties actives 28, 30, 32 et leurs surfaces de glissement respectives 22, 24, 26. Le fluide hydraulique peut être constitué d'une fine couche d'huile permettant un transfert des efforts entre les bagues en engendrant un frottement limité.

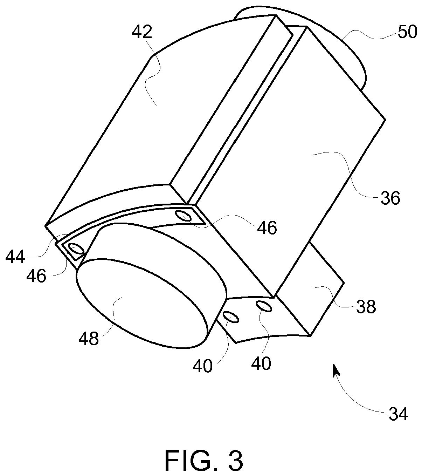

En référence aux figures 2 et 3, le corps annulaire 20 est divisé en douze modules annulaires 34 sensiblement identiques. Dans l'exemple de réalisation illustré, tous les modules annulaires 34 s'étendent entre deux arcs de cercle sous-tendus par un même angle au centre (non référencé) valant sensiblement 30°. Toutefois, on ne sort pas du cadre de l'invention en envisageant un nombre différent de modules annulaires, ou un angle au centre différent. On peut encore prévoir que certains des modules annulaires s'étendent entre deux arcs de cercle sous-tendus par une première valeur d'angle au centre, les autres modules annulaires s'étendant entre deux arcs de cercle sous-tendus par une seconde valeur d'angle au centre, distincte de la première.

En référence à la figure 3, chaque module annulaire 34 comporte un support 36 délimité axialement par deux plans parallèles et perpendiculaires à la direction axiale 6, et orthoradialement par deux plans sécants et formant entre eux un angle sensiblement égal à 30°. Le support 36 se prolonge radialement vers l'intérieur par une partie en saillie 38. La partie en saillie 38 comporte deux trous débouchants 40. Les trous débouchants 40 sont sensiblement dirigés selon la direction axiale 6.

Chaque module annulaire 34 comporte un tampon radial 42 prolongeant radialement vers l'extérieur le support 36. Le tampon radial 42 est réalisé en un matériau limitant la friction avec la surface de glissement 22. Le tampon radial 42 est solidaire d'une languette de fixation 44. La languette de fixation 44 peut être rendue solidaire du support 36 au moyen de deux vis 46.

Le module annulaire 34 comporte par ailleurs un premier tampon axial 48. Le premier tampon axial 48 peut être solidaire d'une languette semblable à la languette 44, ladite languette pouvant être rendue solidaire du support 36 grâce à des moyens similaires aux vis 46. De même que le tampon 42, le tampon 48 est réalisé en un matériau limitant la friction avec la surface de glissement 24.

Le module annulaire 34 comporte un second tampon axial 50. Le tampon 48 et le tampon 50 prolongent tous deux le support 36 selon la direction axiale 6, chacun respectivement selon un sens opposé. Le tampon 50 peut, comme le tampon 48, être solidaire d'une languette afin de permettre sa fixation de manière amovible sur le support 36. Le tampon 50 est avantageusement réalisé en un matériau limitant la friction avec la surface de glissement 26.

Comme cela est visible sur la figure 2, lorsque les douze modules annulaires 34 sont disposés côte à côte, les douze tampons 42 forment une surface sensiblement cylindrique constituant la partie active cylindrique 28. De même, les douze tampons axiaux 48 réalisent une surface sensiblement plane et annulaire constituant la partie active frontale 30. Enfin, les douze tampons axiaux 50 forment une surface sensiblement plane et annulaire constituant la partie active frontale 32.

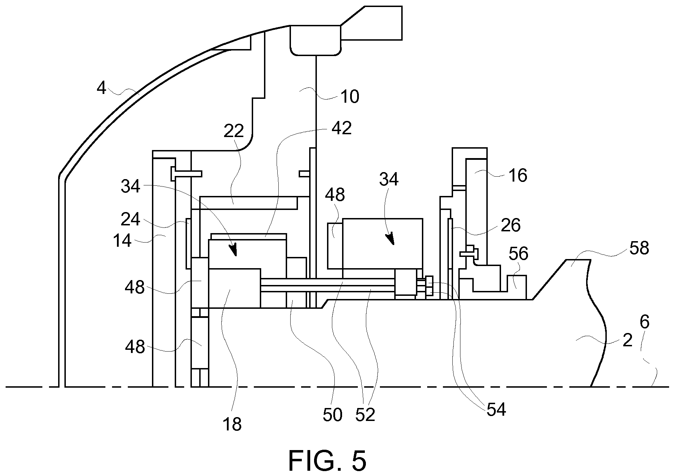

Les deux trous débouchants 40 de la protubérance 38 de chaque module 34 sont chacun destinés au passage d'une broche 52 (cf. figure 5) de l'armature cylindrique 18. L'armature 18 comporte ainsi vingt-quatre broches 52 qui s'étendent selon une même direction parallèle à l'axe 6. Il en résulte la possibilité, pour chaque module 34, de se déplacer en translation par rapport à l'armature 18 selon la direction axiale 6. En d'autres termes, chacun des modules 34 peut se déplacer en translation selon la direction axiale 6, par rapport aux autres modules 34.

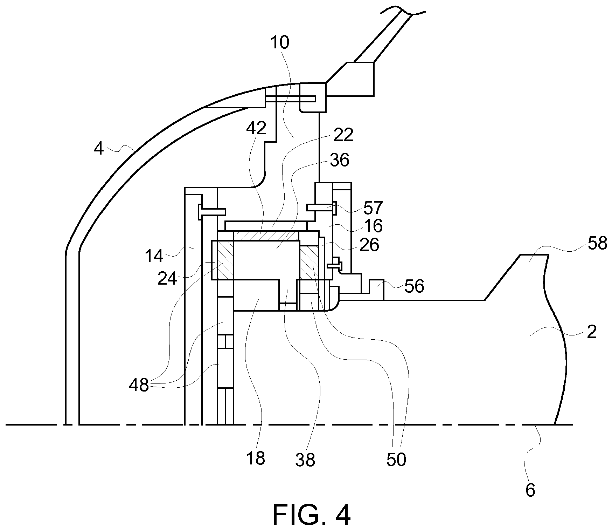

En référence aux figures 4 et 5, la butée axiale 16 est montée sur un manchon mobile 56. Le manchon 56 est disposé autour l'arbre 2 et est notamment capable de se déplacer en translation selon la direction axiale 10 par rapport à l'arbre 2. De cette manière, la butée axiale 16 peut être déplacée entre la position de fonctionnement (cf. figure 4), dans laquelle elle est en appui et solidaire de la bague extérieure 10, et une position de montage/démontage (cf. figure 5), dans laquelle elle est décalée axialement vers l'extérieur du palier 8. Afin de limiter le décalage axial du manchon 56 par rapport à l'arbre 2, ledit arbre 2 comporte une excroissance radiale de butée 58.

Lorsque la butée axiale 16 est disposée selon la position de fonctionnement, la partie active cylindrique 28 est en contact avec la surface de glissement 22, les parties actives frontales 30, 32 étant respectivement en contact avec les surfaces de glissement 24, 26. Le palier rotatif 8 assure alors les fonctions de guidage radial et de guidage axial, de la bague intérieure 12 par rapport à la bague extérieure 10, par rapport à l'axe 6. Des moyens de fixation 57, en l'espèce des vis, permettent de rendre solidaires la bague extérieure 10 avec la butée axiale 16.

Lorsque, comme représenté sur la figure 5, on décale axialement le manchon 56 vers l'extérieur par rapport au palier 8, la butée axiale 16 est disposée selon sa position de montage/démontage. Il est alors possible de décaler chacun des modules 34 axialement vers l'extérieur par rapport à la bague extérieure 10 selon une position de montage/démontage du module 34. Plus particulièrement, il est possible de décaler chacun des modules 34, de sorte que le patin 48 du module 34 soit situé à l'extérieur de l'espace axialement compris entre les parties actives frontales 30 et 32. Afin de limiter le décalage axial d'un module 34 par rapport à l'armature 18, les broches 52 comportent chacune un élément de butée 54.

Il est alors possible, pour un opérateur, d'accéder facilement au(x) tampon(s) 42, 48 ou 50 du module 34 qui a été décalé, et de démonter le(s)dit(s) tampon(s). Pour ce faire, l'opérateur désenclenche les moyens de fixation 57 puis entraine le déplacement axial du manchon 56 depuis sa position de fonctionnement jusqu'à sa position de montage/démontage. L'opérateur peut alors démonter les tampons 50 constituant la partie active 32, et les remplacer. Ensuite, l'opérateur entraine l'un des modules 34 en translation axiale depuis sa position de fonctionnement jusqu'à sa position de montage/démontage. Il démonte ensuite et remplace le tampon 42 et le tampon 48 du module 34 déplacé. L'opérateur remet ensuite le module 34 dans sa position de fonctionnement. Il entraine l'arbre 2 en rotation d'un angle de 30°, puis met en œuvre les mêmes actions sur le module 34 qui a pris la place du module 34 dont les tampons viennent d'être remplacés. Lorsque l'opérateur a remplacé les tampons de tous les modules 34 et qu'il les a remis dans leur position de fonctionnement, il décale la butée axiale 16 depuis sa position de montage/démontage jusqu'à sa position de fonctionnement, puis enclenche de nouveau les moyens de fixation 57. Cette manipulation est rendue d'autant plus facile, que les tampons sont de dimensions réduites grâce à la segmentation du corps annulaire 20. L'opérateur n'est ainsi pas gêné pour les manipuler à l'intérieur du carter mobile 4.

En outre, en actionnant de petites rotations de l'arbre 2 par rapport au carter 4, l'opérateur peut faire en sorte de toujours placer le module 34 sur lequel il travaille en un même endroit, par exemple en un endroit situé à la verticale au dessus de l'axe 6. L'opérateur a alors seulement besoin d'accéder à un petit espace au sein du carter mobile 4 pour démonter facilement les parties actives du palier 8.

Dans l'exemple de réalisation illustré, on a choisi de segmenter le corps annulaire 20 en douze modules annulaires 34. On aurait toutefois pu, sans sortir du cadre de l'invention, envisager un nombre différent de modules annulaires. En particulier, en choisissant un nombre de modules annulaires plus élevé, on diminue la taille des tampons radiaux et des tampons axiaux à manipuler en vue du remplacement des parties actives, de sorte à rendre le travail de l'opérateur plus facile, pour un seul module annulaire. Toutefois, l'augmentation du nombre de modules annulaires multiplie les actions de montage ou de démontage des tampons radiaux ou axiaux, de sorte à allonger le temps nécessaire pour l'opérateur afin de remplacer les tampons de tous les modules annulaires. Le nombre de douze modules 34 est un bon compromis, permettant une manipulation aisée des tampons, tout en évitant d'allonger inutilement la durée des opérations de remplacement des parties actives.

Dans cet exemple de réalisation, la bague intérieure comporte une partie active cylindrique et deux parties actives frontales. Toutefois, on ne sort pas du cadre de l'invention en envisageant un palier rotatif, dans lequel les parties actives sont agencées différemment.

Selon une première variante (non représentée) à ce premier exemple de réalisation, la partie active frontale 32, constituée par les tampons 48, ne fait plus partie de la bague intérieure 10, mais est fixée sur la butée axiale 16. Le corps annulaire 20 comprend en revanche la surface de glissement 26. Selon une deuxième variante (non représentée), la partie active 30 est fixée à la butée axiale 14, le corps cylindrique 20 comprenant la surface de glissement 24. Chacune de ces variantes est techniquement faisable et permet au palier 8 de remplir sa fonction, en rendant le remplacement d'au moins certaines des parties actives par un opérateur plus aisé. La première variante est toutefois plus intéressante que la deuxième, car elle permet, comme le premier exemple de réalisation, de décaler axialement les trois tampons 42, 48 et 50 en dehors de l'espace axialement situé entre les parties actives 30 et 32.

Dans le premier exemple de réalisation et ses première et deuxième variantes, la partie active cylindrique 38 fait partie de la bague intérieure 12, la bague extérieure 10 comportant la surface de glissement 22. Il est en résultat plus facile pour l'opérateur d'accéder au tampon 42 constituant la partie active 38.

Selon une troisième variante (non représentée), la partie active cylindrique est montée sur la bague extérieure, la bague intérieure comprenant la surface de glissement correspondante. Bien qu'une telle variante rende plus compliqué le démontage par l'opérateur des tampons constituant la partie active cylindrique, cette variante simplifie par rapport au premier exemple de réalisation la conception globale du palier d'arbre. Il peut en résulter un coût de conception et de fabrication du palier réduit, ainsi qu'un encombrement moins important.

Par ailleurs, l'invention a été décrite en référence à un palier 8 combinant les fonctions de guidage radial et axial de l'arbre 2 par rapport au bâti 4. Il est toutefois possible d'envisager un palier conforme à l'invention et assurant la seule fonction de guidage radial. En d'autres termes, l'invention peut être également mise en œuvre le palier d'arbre fixé sur l'extrémité entraînante de l'arbre 2. Dans ce cas, ce palier diffère du palier 8 en ce qu'il est dépourvu des butées axiales 14 et 16 et des parties actives 30 et 32. Par ailleurs, il est bien entendu possible d'envisager sans sortir du cadre de l'invention une bague comprenant une partie active cylindrique segmentée, et une ou deux parties actives frontales non segmentées.

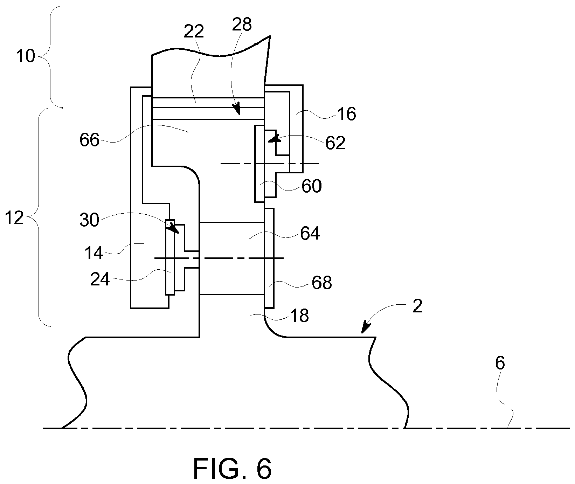

En référence maintenant à la figure 6, il est représenté un second exemple de réalisation de l'invention. Les éléments identiques portent les mêmes références.

Comme dans le premier exemple de réalisation, la bague intérieure 12 comprend une armature 18 et un corps annulaire 20 segmenté en une pluralité de modules annulaires (non référencés). Le second exemple de réalisation diffère notamment du premier exemple, en ce que chaque module annulaire est en outre segmenté, selon la direction radiale par rapport à l'axe 6, en une portion interne 64 et une portion externe 66. La portion externe 66 s'étend radialement en saillie vers l'extérieur, depuis la portion interne 64. La portion 64 peut être déplacée en translation, relativement par rapport à la portion 66, selon la direction de l'axe 6. Lorsque les modules annulaires sont en conditions de fonctionnement, un moyen de blocage 68 empêche le déplacement relatif de la portion interne 64 de chaque module par rapport à la portion externe 66. Par exemple, le moyen de blocage 68 peut comprendre un circlips.

En outre, selon le deuxième exemple de réalisation, la bague intérieure 12 comporte une surface de glissement 60 frontale, sensiblement plane et perpendiculaire à l'axe 6, et en contact glissant axial avec une partie active 62 frontale montée sur la butée axiale 16. Ainsi, la répartition des parties actives entre les bagues 10, 12 et les butées 14, 16 est celle de la première variante du premier exemple de réalisation. Comme indiqué précédemment, cette disposition permet au palier d'assurer correctement sa double fonction de guidage radial et axial, tout en optimisant l'espace en vue de faciliter les opérations de remplacement des parties actives du palier.

Au moyen d'un palier selon le deuxième exemple de réalisation, un opérateur peut mettre en œuvre le procédé suivant en vue du démontage de la partie active 30.

Dans un premier temps, l'opérateur enlève le moyen de blocage 68. Ensuite, l'opérateur déplace la portion interne 64 en translation, relativement par rapport à la portion externe 66, selon la direction de l'axe 6, jusqu'à ce que la partie active 30 soit axialement décalée à l'extérieur de l'espace axialement délimité par les butées 14 et 16. Il est alors plus aisé, pour un opérateur, de démonter les tampons 48 constituant la partie active 30.

Une fois les tampons 48 démontés et remplacés, l'opérateur déplace la portion interne 64 dans sa position d'origine et replace le moyen de blocage 68.

Au vu des deux exemples de réalisation qui ont été détaillés en référence aux figures, l'invention permet à un opérateur de remplacer plus facilement les parties actives d'une bague de palier d'une unité de propulsion d'un véhicule marin. Il en résulte en particulier la possibilité d'assurer la maintenance des paliers d'arbre sans devoir démonter l'unité de propulsion et donc sans devoir mettre le navire en cale sèche.

L'invention est encore plus intéressante lorsque le palier d'arbre dont on souhaite remplacer les parties actives assure une double fonction de guidage selon les directions radiale et axiale.

En effet, il apparait déjà qu'un palier présentant notamment à la fois une partie active cylindrique et deux parties actives frontales dans lequel la partie active cylindrique est disposée axialement entre les parties actives frontales présente un bien moindre encombrement qu'un palier classiquement utilisé, comprenant un premier palier rotatif assurant le guidage radial et un palier de butée axial assurant le guidage axial.

En outre, avec un palier conforme à l'invention, l'opérateur peut démonter et remplacer les tampons constituant les parties actives frontale et cylindrique en travaillant en un seul même endroit. Il en résulte la possibilité d'augmenter le volume de cet espace, de manière à faciliter encore le remplacement des parties actives du palier depuis l'intérieur du carter mobile de l'unité de propulsion.

## Revendications

1. Bague (10, 12) pour palier d'arbre (8) d'une unité de propulsion de véhicule marin, comportant un corps annulaire (20), une partie active cylindrique (28) destinée à assurer une fonction de contact glissant avec une autre bague (12, 10) du palier d'arbre (8), la partie active cylindrique (28) étant segmentée en une pluralité de segments de surface cylindrique, le corps annulaire (20) étant segmenté en une pluralité de modules en forme de section de corps annulaire (34) escamotables, chaque module (34) comportant un segment de surface cylindrique faisant partie de la partie active cylindrique (28), **caractérisée en ce que** chaque segment de surface cylindrique est fixée de manière amovible au corps annulaire (20).

2. Bague (10, 12) selon la revendication 1, dans laquelle chaque module (34) est mobile par rapport aux autres en translation selon une direction axiale (6) de la bague (10, 12).

3. Bague (10, 12) selon la revendication 1 ou 2, dans laquelle chaque module (34) comporte un support (36) et un tampon radial (42), le tampon radial (42) comprenant le segment de surface cylindrique, le tampon radial (42) pouvant être désolidarisé par rapport au support (36).

4. Bague (10, 12) selon l'une quelconque des revendications 1 à 3, comportant une armature cylindrique (18) comprenant, pour chaque module (34), deux tiges (52) dirigées selon une direction axiale (6) de la bague (10, 12), chaque module (34) comprenant deux perçages débouchants (40), chaque tige (52) étant insérée dans un perçage débouchant (40) du module (34) associé de sorte à pouvoir coulisser à l'intérieur de celui-ci.

5. Bague (10, 12) selon l'une quelconque des revendications 1 à 4, dans laquelle tous les modules (34) s'étendent entre deux arcs de cercle sous-tendus par un même angle au centre.

6. Bague (10, 12) selon la revendication 5, dans laquelle l'angle au centre est compris entre 20° et 40°.

7. Bague (12) selon l'une quelconque des revendications 1 à 6, comportant une partie active frontale (30, 32) destinée à assurer une fonction de contact glissant avec une butée axiale (14, 16) du palier d'arbre (8), la partie active frontale (30,32) étant segmentée en une pluralité de surfaces frontales, chaque surface frontale étant fixée de manière amovible au corps annulaire (20).

8. Bague (12) selon la revendication 7, dans laquelle chaque module (34) comporte une surface frontale, la surface frontale faisant partie de la partie active frontale (30, 32).

9. Bague (12) selon la revendication 7 ou 8, dans laquelle chaque module (34) est mobile entre une position dans laquelle ledit module (34) est axialement situé d'un côté de la partie active frontale (30, 32) et une position dans laquelle ledit module (34) est axialement situé de l'autre côté de la partie active frontale (30, 32).

10. Bague (12) selon l'une quelconque des revendications 7 à 9, dans laquelle chaque module (34) comporte un support (36) et un tampon axial (48, 50), le tampon axial (48, 50) comprenant la surface frontale, le tampon axial (48, 50) pouvant être désolidarisé par rapport au support (36).

11. Bague (12) selon l'une quelconque des revendications 7 à 10, comportant une seconde partie active frontale (32, 30) destinée à assurer une fonction de contact glissant avec une seconde butée axiale (16, 14) du palier d'arbre (8), la partie active cylindrique (28) étant axialement située entre les parties actives frontales (30, 32).

12. Palier d'arbre (8) destiné à être monté sur un arbre (2) d'une unité de propulsion d'un véhicule aquatique, comprenant une bague intérieure (12) et une bague extérieure (10), au moins l'une des bagues intérieure et extérieure (10, 12) étant une bague selon l'une quelconque des revendications 1 à 11.

13. Palier d'arbre (8) selon la revendication 12, comprenant une première butée axiale (16) et une seconde butée axiale (14), la première butée axiale (16) étant mobile en translation selon une direction axiale (6) du palier (8), la première butée axiale (16) comprenant une première partie active frontale (62) assurant une fonction de contact glissant avec la bague intérieure (12), la bague intérieure (12) comprenant une deuxième partie active frontale (30) assurant une fonction de contact glissant avec la deuxième butée axiale (14).

14. Procédé de démontage d'une surface constituant une partie active (28, 30, 32, 62) d'un palier (8) selon la revendication 12 ou 13, dans lequel :
- on déplace un module (34) de la bague en position de démontage,
- on démonte le segment de surface cylindrique du module (34) déplacé, et
- on replace le module (34) déplacé dans sa position d'origine.

## Patentansprüche

1. Ring (10, 12) für ein Wellenlager (8) einer Antriebseinheit eines Wasserfahrzeugs, der einen Ringkörper (20), einen zylindrischen aktiven Teil (28) aufweist, der dazu bestimmt ist, eine Gleitkontaktfunktion mit einem anderen Ring (12, 10) des Wellenlagers (8) zu gewährleisten, wobei der zylindrische aktive Teil (28) in eine Vielzahl von Segmenten mit Zylinderfläche segmentiert ist, wobei der Ringkörper (20) in eine Vielzahl von einziehbaren Modulen in Form eines Ringkörperabschnitts (34) segmentiert ist, wobei jedes Modul (34) ein Zylinderflächensegment aufweist, das Teil des zylindrischen aktiven Teils (28) ist, **dadurch gekennzeichnet, dass** jedes Zylinderflächensegment entfernbar am Ringkörper (20) befestigt ist.

2. Ring (10, 12) nach Anspruch 1, wobei jedes Modul (34) bezüglich der anderen gemäß einer axialen Richtung (6) des Rings (10, 12) translationsbeweglich ist.

3. Ring (10, 12) nach Anspruch 1 oder 2, wobei jedes Modul (34) einen Träger (36) und einen radialen Puffer (42) aufweist, wobei der radiale Puffer (42) das Zylinderflächensegment enthält, wobei der radiale Puffer (42) bezüglich des Trägers (36) getrennt werden kann.

4. Ring (10, 12) nach einem der Ansprüche 1 bis 3, der eine zylindrische Armierung (18) aufweist, die für jedes Modul (34) zwei gemäß einer axialen Richtung (6) des Rings (10, 12) ausgerichtete Stangen (52) enthält, wobei jedes Modul (34) zwei durchgehende Bohrungen (40) enthält, wobei jede Stange (52) in eine durchgehende Bohrung (40) des zugeordneten Moduls (34) eingeführt wird, um in deren Inneren gleiten zu können.

5. Ring (10, 12) nach einem der Ansprüche 1 bis 4, wobei alle Module (34) sich zwischen zwei von einem gleichen Zentriwinkel aufgespannten Kreisbögen erstrecken.

6. Ring (10, 12) nach Anspruch 5, wobei der Zentriwinkel zwischen 20° und 40° liegt.

7. Ring (12) nach einem der Ansprüche 1 bis 6, der einen aktiven Stirnteil (30, 32) aufweist, der dazu bestimmt ist, eine Gleitkontaktfunktion mit einem axialen Anschlag (14, 16) des Wellenlagers (8) zu gewährleisten, wobei der aktive Stirnteil (30, 32) in eine Vielzahl von Stirnflächen segmentiert ist, wobei jede Stirnfläche lösbar am Ringkörper (20) befestigt ist.

8. Ring (12) nach Anspruch 7, wobei jedes Modul (34) eine Stirnfläche aufweist, wobei die Stirnfläche Teil des aktiven Stirnteils (30, 32) ist.

9. Ring (12) nach Anspruch 7 oder 8, wobei jedes Modul (34) zwischen einer Stellung, in der das Modul (34) sich axial auf einer Seite des aktiven Stirnteils (30, 32) befindet, und einer Stellung beweglich ist, in der das Modul (34) sich axial auf der anderen Seite des aktiven Stirnteils (30, 32) befindet.

10. Ring (12) nach einem der Ansprüche 7 bis 9, wobei jedes Modul (34) einen Träger (36) und einen axialen Puffer (48, 50) aufweist, wobei der axiale Puffer (48, 50) die Stirnfläche enthält, wobei der axiale Puffer (48, 50) bezüglich des Trägers (36) getrennt werden kann.

11. Ring (12) nach einem der Ansprüche 7 bis 10, der einen zweiten aktiven Stirnteil (32, 30) aufweist, der dazu bestimmt ist, eine Gleitkontaktfunktion mit einem zweiten axialen Anschlag (16, 14) des Wellenlagers (8) zu gewährleisten, wobei der zylindrische aktive Teil (28) sich axial zwischen den aktiven Stirnteilen (30, 32) befindet.

12. Wellenlager (8), das dazu bestimmt ist, auf eine Welle (2) einer Antriebseinheit eines Wasserfahrzeugs montiert zu werden, das einen inneren Ring (12) und einen äußeren Ring (10) enthält, wobei mindestens einer der inneren und äußeren Ringe (10, 12) ein Ring nach einem der Ansprüche 1 bis 11 ist.

13. Wellenlager (8) nach Anspruch 12, das einen ersten axialen Anschlag (16) und einen zweiten axialen Anschlag (14) enthält, wobei der erste axiale Anschlag (16) gemäß einer axialen Richtung (6) des Lagers (8) translationsbeweglich ist, wobei der erste axiale Anschlag (16) einen ersten aktiven Stirnteil (62) enthält, der eine Gleitkontaktfunktion mit dem inneren Ring (12) gewährleistet, wobei der innere Ring (12) einen zweiten aktiven Stirnteil (30) enthält, der eine Gleitkontaktfunktion mit dem zweiten axialen Anschlag (14) gewährleistet.

14. Verfahren zum Ausbau einer Fläche, die einen aktiven Teil (28, 30, 32, 62) eines Lagers (8) nach Anspruch 12 oder 13 bildet, wobei:
- ein Modul (34) des Rings in die Ausbaustellung verschoben wird,
- das Zylinderflächensegment aus dem verschobenen Modul (34) ausgebaut wird, und
- das verschobene Modul (34) wieder in seine Anfangsstellung gebracht wird.

## Claims

1. Ring (10, 12) for a shaft bearing (8) of a drive unit of a watercraft, comprising an annular body (20), a cylindrical active portion (28) designed to provide a sliding contact function with another ring (12, 10) of the shaft bearing (8), the cylindrical active portion (28) being segmented into a plurality of segments having a cylindrical surface, the annular body (20) being segmented into a plurality of modules in the form of a section of an annular body (34), these being retractable, each module (34) comprising a cylindrical surface segment forming part of the cylindrical active portion (28), **characterized in that** each cylindrical surface segment is removably secured to the annular body (20).

2. Ring (10, 12) according to Claim 1, wherein each module (34) is able to move with respect to the others in translation along an axial direction (6) of the ring (10, 12).

3. Ring (10, 12) according to Claim 1 or 2, wherein each module (34) comprises a support (36) and a radial buffer (42), the radial buffer (42) comprising the cylindrical surface segment, the radial buffer (42) being able to be detached from the support (36).

4. Ring (10, 12) according to any one of Claims 1 to 3, comprising a cylindrical frame (18) that comprises, for each module (34), two rods (52) directed along an axial direction (6) of the ring (10, 12), each module (34) comprising two through-holes (40), each rod (52) being inserted into an associated through-hole (40) of the module (34) so as to be able to slide therein.

5. Ring (10, 12) according to any one of Claims 1 to 4, wherein all of the modules (34) extend between two circular arcs subtended by the same angle at the centre.

6. Ring (10, 12) according to Claim 5, wherein the angle at the centre is between 20° and 40°.

7. Ring (12) according to any one of Claims 1 to 6, comprising a frontal active portion (30, 32) that is intended to provide a sliding contact function with an axial stop (14, 16) of the shaft bearing (8), the frontal active portion (30, 32) being segmented into a plurality of frontal surfaces, each frontal surface being removably secured to the annular body (20).

8. Ring (12) according to Claim 7, wherein each module (34) comprises a frontal surface, the frontal surface forming part of the frontal active portion (30, 32).

9. Ring (12) according to Claim 7 or 8, wherein each module (34) is able to move between a position in which said module (34) is axially located on one side of the frontal active portion (30, 32) and a position in which said module (34) is axially located on the other side of the frontal active portion (30, 32).

10. Ring (12) according to any one of Claims 7 to 9, wherein each module (34) comprises a support (36) and an axial buffer (48, 50), the axial buffer (48, 50) comprising the frontal surface, the axial buffer (48, 50) being able to be detached from the support (36).

11. Ring (12) according to any one of Claims 7 to 10, comprising a second frontal active portion (32, 30) that is intended to provide a sliding contact function with a second axial stop (16, 14) of the shaft bearing (8), the cylindrical active portion (28) being axially located between the frontal active portions (30, 32).

12. Shaft bearing (8) intended to be mounted on a shaft (2) of a propulsion unit of a watercraft, comprising an inner ring (12) and an outer ring (10), at least one of the inner ring and the outer ring (10, 12) being a ring according to any one of Claims 1 to 11.

13. Shaft bearing (8) according to Claim 12, comprising a first axial stop (16) and a second axial stop (14), the first axial stop (16) being able to move in translation along an axial direction (6) of the bearing (8), the first axial stop (16) comprising a first frontal active portion (62) that provides a function of sliding contact with the inner ring (12), the inner ring (12) comprising a second frontal active portion (30) that provides a function of sliding contact with the second axial stop (14) .

14. Method for disassembling a surface constituting an active portion (28, 30, 32, 62) of the bearing (8) according to Claim 12 or 13, which involves:
- moving a module (34) of the ring into a disassembly position,
- disassembling the cylindrical surface segment of the moved module (34), and
- replacing the moved module (34) into its original position.
